# EUROPÄISCHE PATENTSCHRIFT

(11) **EP 4 605 327 B1**
(45) Veröffentlichungstag und Bekanntmachung des Hinweises auf die Patenterteilung: **01.04.2026**
(21) Anmeldenummer: 23790007.1
(22) Anmeldetag: 13.10.2023
(51) Int. Cl.: B65G 65/00, B65G 1/137

(54) **VERFAHREN UND -SYSTEM ZUM VERLADEN UND UMLADEN VON WARENBEHÄLTERN**
METHOD AND SYSTEM FOR LOADING AND TRANSFERRING GOODS CONTAINERS
PROCÉDURE ET SYSTÈME DE CHARGEMENT ET DE TRANSBORDEMENT DE CONTENEURS DE MARCHANDISES

(30) Priorität: 17.10.2022 DE 102022127082
(43) Veröffentlichungstag der Anmeldung: 27.08.2025
(73) Patentinhaber: Safelog GmbH, 85570 Markt Schwaben (DE)
(72) Erfinder: WOLTER, Michael, 83727 Schliersee (DE)
(74) Vertreter: Grättinger Möhring von Poschinger Patentanwälte Partnerschaft mbB
(86) Internationale Anmeldenummer: PCT/EP2023/078514
(87) Internationale Veröffentlichungsnummer: WO 2024/083681

(56) Entgegenhaltungen:
- WO-A1-2019/238697
- DE-B4- 102013 104 423
- JP-A- 2020 175 964
- US-A1- 2011 014 021
- US-A1- 2016 347 545
- US-A1- 2022 297 936

## Beschreibung

Die vorliegende Erfindung betrifft verschiedene miteinander in Zusammenhang stehende Verfahren und ein System zum Verladen von Warenbehältern bzw. zum Umladen von in Warenbehältern angelieferten Waren zwischen verschiedenen Warenbehältern.

Systeme und Verfahren zur Handhabung bzw. zum Verladen von Behältern, Paletten oder Werkstücken sind aus dem Stand der Technik bekannt. Die DE 10 2021 131651 A1 beschreibt ein Palettenaufgabe- und Palettenabgabesystem sowie ein zugehöriges Verfahren, wobei die Handhabung der verwendeten Transporthilfsmittel vollautomatisch erfolgt. Die DE 10 2019 214 088 A1 offenbart eine Handhabungsvorrichtung zum Einsatz an einer Werkzeugmaschine zum Aufnehmen bzw. Übergeben eines Werkstücks. In der DE 10 2022 118 506 A1 wird ein fahrerloses Transportsystem zum Transportieren von Produkten aus einer Druckmaschine beschrieben. Die DE 7404016 U offenbart eine Einrichtung zum Laden von Stückgut auf eine Ladefläche eines LKW.

Die DE 10 2013 104423 B4 offenbart ein Verfahren zum Einladen eines Warenbehälters auf einem AGV an einer ortsfest montierten Verladestation, wobei die Verladestation eine Hebeeinrichtung mit einer zwischen einer oberen Förderebene und einer unteren Förderebene vertikal verfahrbaren Ladegabel mit zwei Ladezinken aufweist, mit den folgenden Schritten:
Positionieren der Ladegabel der Verladestation auf geeigneter Höhe in der oberen Förderebene und Antransportieren des Warenbehälters zu der Verladestation in der oberen Förderebene mittels einer Fördereinrichtung bis der Warenbehälter von der Ladegabel getragen wird;
Positionieren eines in der unteren Förderebene verfahrbaren AGV zur Aufnahme des Warenbehälters exakt unterhalb des in der oberen Förderebene von der Ladegabel getragenen Warenbehälters.

Weiter offenbart die DE 10 2013 04423 B4 ein Verfahren zur Entnahme eines Warenbehälters auf einem AGV an einer ortsfest montierten Verladestation, wobei die Verladestation eine Hebeeinrichtung mit einer zwischen einer oberen Förderebene und einer unteren Förderebene vertikal verfahrbaren Ladegabel mit zwei Ladezinken aufweist, mit den folgenden Schritten:Positionieren der Ladegabel der Verladestation auf geeigneter Höhe in der unteren Förderebene und Positionieren eines AGV mit einem darauf befindlichen Warenbehälter vor der Verladestation;
Geradeausfahrt des AGV's in Längsrichtung der Ladezinken zur Verladestation hin, so dass die Ladenzinken der Ladegabel aufgrund der Geradeausfahrt des AGV's unterhalb des Warenbehälters durch Vertikalschlitze in einen unteren Abschnitt des Warenbehälters einfahren;
Vertikales Anheben der Ladegabel bis in die obere Förderebene, so dass der beim Anheben von der Ladegabel getragene Warenbehälter nach oben herausgehoben und bis in die obere Förderebene angehoben wird,Übergabe des Warenbehälters an eine in der oberen Förderebene befindliche Fördereinrichtung zum Weitertransport des Warenbehälters in der oberen Förderebene.

Die DE 10 2013 104423 B4 offenbart dazu ein System zum Einladen eines Warenbehälters auf einem AGV und zur Entnahme eines Warenbehälters auf einem AGV umfassend:
- eine ortsfest montierte Verladestation mit einer Hebeeinrichtung, die eine zwischen einer oberen Förderebene und einer unteren Förderebene vertikal verfahrbare Ladegabel mit zwei Ladezinken aufweist,
- eine Fördereinrichtung zum An- und Abtransport von Warenbehältern in der oberen Förderebene zu der Verladestation hin oder von dieser weg, - wenigstens ein in der unteren Förderebene verfahrbares AGV, wobeizum Einladen eines Warenbehälters auf dem AGV, die einen Warenbehälter tragenden Ladezinken der Hebeeinrichtung bei geeigneter Positionierung des AGV vertikal abgesenkt werden können, bis der Warenbehälter unterseitig abgestützt ist und bis die in einem unteren Abschnitt des Überbehälters durch die Vertikalschlitze in diesen hineinragenden Ladezinken keinen Kontakt mehr zum Warenbehälter haben und anschließend durch Geradeausfahrt des AGV's linear herausgefahren werden könnenundzur Entnahme eines Warenbehälters auf dem AGV, die Ladenzinken der Ladegabel bei geeigneter Geradeausfahrt des AGV's unterhalb des Warenbehälters durch die Vertikalschlitze in einen unteren Abschnitt des Warenbehälters einfahren und anschließend mitsamt dem Warenbehälter angehoben werden können, bis der Warenbehälter nach oben entnommen wurde.

In der Praxis ergibt sich in Logistikzentren oder sonstigen Umschlagslagern häufig die Aufgabe, dass die in standardisierten Warenbehältern (z.B. sogenannten KLT-Behältern) angelieferte Waren umsortiert und in andere Warenbehälter umgeladen werden müssen, um z.B. die in einem ersten Warenbehälter angelieferten Waren auf eine Mehrzahl an weiteren Warenbehältern zu verteilen, die dann an unterschiedliche Empfänger versandt oder an unterschiedlichen Stellen innerhalb des Lagers (zwischen-)gelagert werden müssen.

Im Stand der Technik werden dabei die mit Waren befüllten Warenbehälter typischerweise mittels üblicher, festinstallierter Fördertechnik innerhalb des Lagers auf geeignete Weise zu entsprechenden Umladestationen verbracht, wo dann die Waren zwischen den verschiedenen Warenbehältern umgeladen werden und von wo aus die entsprechend beladenen Warenbehälter wieder mittels üblicher Fördertechnik abtransportiert werden können.

Die in diesem Kontext derzeit zur Anwendung kommenden Verfahren und Systeme sind allerdings vergleichsweise kostenaufwendig und wenig flexibel im Hinblick auf eine Anpassung an verschiedene Lagergestaltungen, so dass mit der vorliegenden Erfindung entsprechende Verfahren und Systeme bereitgestellt werden sollen, mit denen bei vergleichsweise günstiger Realisierung ein hohes Maß an Flexibilität bei der Ausstattung verschiedenster Lager mit solchen Systemen gegeben sein soll.

Dabei werden im Rahmen der vorliegenden Erfindung verschiedene Verfahren und Systeme bereitgestellt, nämlich ein Verfahren zum Einladen eines Warenbehälters in einen auf einem AGV ("automated guided vehicle") montierten Überbehälter an einer ortsfest montierten Verladestation gemäß Anspruch 1, ein Verfahren zur Entnahme eines Warenbehälters aus einem auf einem AGV montierten Überbehälter an einer ortsfest montierten Verladestation gemäß Anspruch 2, ein - die Verfahren nach Anspruch 1 und Anspruch 2 verwendendes - Verfahren zum Umladen von in Warenbehältern angelieferten Waren in andere Warenbehälter gemäß Anspruch 3 sowie ein System zum Einladen eines Warenbehälters in einen auf einem AGV montierten Überbehälter hinein und zur Entnahme eines Warenbehälters aus einem auf einem AGV montierten Überbehälter gemäß Anspruch 4. Die abhängigen Ansprüche betreffen verschiedene vorteilhafte Weiterbildung des beanspruchten Systems, die allesamt gleichermaßen zur weiteren Ausgestaltung der vorgenannten Verfahren geeignet sind.

Bei dem erfindungsgemäßen Verfahren gemäß Anspruch 1 zum Einladen eines Warenbehälters in einen auf einem AGV ("automated guided vehicle") montierten Überbehälter an einer ortsfest montierten Verladestation ist vorgesehen, dass die Verladestation eine Hebeeinrichtung mit einer zwischen einer oberen Förderebene und einer unteren Förderebene vertikal verfahrbaren Ladegabel mit zwei Ladezinken aufweist, wobei das Verfahren die folgenden Schritte aufweist:
(A1) Positionieren der Ladegabel der Verladestation auf geeigneter Höhe in der oberen Förderebene und Antransportieren des Warenbehälters zu der Verladestation in der oberen Förderebene mittels einer Fördereinrichtung, so dass der Warenbehälter von der Ladegabel getragen wird;
(B1) Positionieren eines in der unteren Förderebene verfahrbaren AGV mit einem darauf montierten Überbehälter zur Aufnahme des Warenbehälters exakt unterhalb des in der oberen Förderebene von der Ladegabel getragenen Warenbehälters;
(C1) Vertikales Absenken der Ladegabel und des darauf befindlichen Warenbehälters in den darunter befindlichen Überbehälter hinein bis der Warenbehälter unterseitig in dem Überbehälter abgestützt ist und bis die in einem unteren Abschnitt des Überbehälters in diesen hineinragenden Ladezinken keinen Kontakt mehr zu dem innerhalb des Überbehälters abgestützten Warenbehälter haben, wobei der Überbehälter zur Ermöglichung des Absenkens der Ladegabel in einer seitlichen Wand zwei von der Oberkante der Wand bis zum unteren Abschnitt reichende Vertikalschlitze aufweist;
(D1) Geradeausfahrt des AGV's mit dem darauf befindlichem Überbehälter und dem innerhalb des Überbehälters befindlichen Warenbehälter in Längsrichtung der Ladezinken von der Verladestation weg, so dass die Ladenzinken der ortsfest montierten Verladestation aufgrund der Geradeausfahrt des AGV's aus dem Überbehälter herausgefahren werden.

Bei dem erfindungsgemäßen Verfahren gemäß Anspruch 2 zur Entnahme eines Warenbehälters aus einem auf einem AGV ("automated guided vehicle") montierten Überbehälter an einer ortsfest montierten Verladestation ist vorgesehen, dass die Verladestation eine Hebeeinrichtung mit einer zwischen einer oberen Förderebene und einer unteren Förderebene vertikal verfahrbaren Ladegabel mit zwei Ladezinken aufweist, wobei das Verfahren die folgenden Schritte aufweist:
(A2) Positionieren der Ladegabel der Verladestation auf geeigneter Höhe in der unteren Förderebene und Positionieren eines AGV mit einem darauf montierten Überbehälter und dem innerhalb des Überbehälters befindlichen Warenbehälter vor der Verladestation;
(B2) Geradeausfahrt des AGV's in Längsrichtung der Ladezinken zur Verladestation hin, so dass die Ladenzinken der Ladega-bel aufgrund der Geradeausfahrt des AGV's unterhalb des Warenbehälters durch Vertikalschlitze in einer seitlichen Wand des Überbehälters in einen unteren Abschnitt des Überbehälters einfahren;
(C2) Vertikales Anheben der Ladegabel bis in die obere Förderebene, so dass der dabei von der Ladegabel getragene Warenbehälter nach oben aus dem Überbehälter herausgehoben und bis in die obere Förderebene angehoben wird, wobei sich die Vertikalschlitze in einer seitlichen Wand des Überbehälters zur Ermöglichung des Heraushebens der Ladegabel bis zum oberen Rand der Wand erstrecken;
(D2) Übergabe des Warenbehälters an eine in der oberen Förderebene befindliche Fördereinrichtung zum Weitertransport des Warenbehälters in der oberen Förderebene.

Das ebenfalls erfindungsgemäße Verfahren gemäß Anspruch 3 zum Umladen von in Warenbehältern angelieferten Waren in andere Warenbehälter an einer Umladestation umfasst die folgenden Schritte:
(A3) Einladen eines ersten mit den umzusortierenden Waren befüllten Warenbehälters in einen auf einem ersten AGV montierten Überbehälter an einer ortsfest montierten Verladestation gemäß einem Verfahren nach Anspruch 1;
(B3) Einladen eines zweiten, leeren Warenbehälters in einen auf einem zweiten AGV montierten Überbehälter an einer ortsfest montierten Verladestation gemäß einem Verfahren nach Anspruch 1;
(C3) Optional, Einladen wenigstens eines weiteren leeren oder mit Waren gefüllten Warenbehälters in je einen auf einem weiteren AGV montierten Überbehälter an einer ortsfest montierten Verladestation gemäß einem Verfahren nach Anspruch 1;
(D3) Verfahren der wenigstens zwei AGV's mit den darauf befindlichen Über- und Warenbehältern in der unteren Förderebene zu einer Umladestation;
(E3) Manuelles oder automatisches Umladen von Waren aus dem ersten Warenbehälter in den zweiten Warenbehälter an der Umladestation und, optional, Umladen von weiteren Waren zwischen den verschiedenen Warenbehältern, bis der zweite Warenbehälter mit den gewünschten Waren befüllt ist;
(F3) Nach Abschluss des Umladens der Waren, Verfahren der verschiedenen AGV's mit Über- und Warenbehältern zu einer Verladestation und Entnahme des jeweiligen Warenbehälters aus dem auf dem jeweiligen AGV montierten Überbehälter gemäß einem Verfahren nach Anspruch 2.

Das erfindungsgemäße System gemäß Anspruch 4, welches zum Einladen eines Warenbehälters in einen auf einem AGV montierten Überbehälter hinein und zur Entnahme eines Warenbehälters aus einem auf einem AGV montierten Überbehälter dient, umfasst entsprechend
- eine ortsfest montierte Verladestation mit einer Hebeeinrichtung, die eine zwischen einer oberen Förderebene und einer unteren Förderebene vertikal verfahrbare Ladegabel mit zwei Ladezinken aufweist,
- eine Fördereinrichtung zum An- und Abtransport von Warenbehältern in der oberen Förderebene zu der Verladestation hin oder von dieser weg, und
- wenigstens ein in der unteren Förderebene verfahrbares AGV mit einem darauf montierten Überbehälter,
wobei der Überbehälter in einer seitlichen Wand wenigstens zwei bis zum oberen Rand reichende Vertikalschlitze aufweist und derart gestaltet ist, dass
(a) zum Einladen eines Warenbehälters in den auf dem AGV montierten Überbehälter die einen Warenbehälter tragenden Ladezinken der Hebeeinrichtung bei geeigneter Positionierung des AGV vertikal abgesenkt werden können, bis der Warenbehälter unterseitig in dem Überbehälter abgestützt ist und bis die in einem unteren Abschnitt des Überbehälters durch die Vertikalschlitze in diesen hineinragenden Ladezinken keinen Kontakt mehr zum Warenbehälter haben und anschließend durch Geradeausfahrt des AGV's aus dem Überbehälter linear herausgefahren werden können
   und
(b) zur Entnahme eines Warenbehälters aus dem auf dem AGV montierten Überbehälter die Ladenzinken der Ladegabel bei geeigneter Geradeausfahrt des AGV's unterhalb des Warenbehälters durch die Vertikalschlitze in einen unteren Abschnitt des Überbehälters einfahren und anschließend mitsamt dem Warenbehälter angehoben werden können, bis der Warenbehälter nach oben aus dem Überbehälter entnommen wurde.

In Zusammenhang mit den vorstehend genannten Verfahren und dem vorstehend genannten System ist zunächst anzumerken, dass dabei ein Transport der Warenbehälter in zwei Förderebenen, nämlich einer oberen Förderebene und einer unteren Förderebene, vorgesehen ist. In der oberen Förderebene befindet sich eine Fördereinrichtung (z.B. eine auf übliche Weise angetriebene und auf geeignete Weise steuerbare Rollen- oder Bandförderanlage), mit welcher die an geeigneter Stelle an die Fördereinrichtung übergebenen Warenbehälter in der oberen Förderebene der Verladestation zugeführt oder von dieser abtransportiert werden können. In der unteren Förderebene, welche typischerweise durch den flachen Boden des Lagers gebildet wird, befindet sich mindestens ein dort verfahrbares AGV mit einem fest darauf montierten Überbehälter.

Vorteilhaft kann dabei vorgesehen sein, dass die in der oberen Förderebene befindliche Fördereinrichtung - zumindest im Bereich der Verladestation - von einem in der unteren Förderebene befindlichen AGV samt darauf befindlichem Überbehälter (und ggfs. einem in dem Überbehälter befindlichem Warenbehält) unterfahren werden kann.

Die Verladestation ist erfindungsgemäß ortsfest montiert und weist eine Hebeeinrichtung mit einer zwischen der oberen Förderebene und der unteren Förderebene vertikal verfahrbaren Ladega-bel mit zwei Ladezinken auf, so dass diese einen auf den Ladezinken der Ladegabel abgestützten Warenbehälter von der oberen in die untere Förderebene (und umgekehrt) transportieren kann.

Es ist erfindungsgemäß vorgesehen, dass ein durch die Fördereinrichtung (in der oberen Förderebene) der Verladestation zugeführter Warenbehälter gemäß dem Verfahren nach Anspruch 1 mittels der Hebeeinrichtung von oben in einen spezifisch hierfür gestalteten und auf einem AGV montierten Überbehälter eingeladen werden kann und dass ein durch ein AGV mit einem entsprechenden Überbehälter (in der unteren Förderebene) der Verladestation zugeführter Warenbehälter gemäß dem Verfahren nach Anspruch 2 mittels der Hebeeinrichtung nach oben aus dem Überbehälter herausgehoben werden kann, um diesen sodann wiederum an die (in der oberen Förderebene befindliche) Fördereinrichtung zum Weitertransport zu übergeben.

Selbstverständlich müssen dabei die im Bereich der Verladestation in der oberen Förderebene befindliche Fördereinrichtung und die Verladestation derart gestaltet sein, dass ein mittels der Fördereinrichtung zugeführter Warenbehälter lagerecht, d.h. in einer möglichst exakt vorgegebenen Position, auf den Ladezinken der Ladegabel der Hebeeinrichtung positioniert werden kann bzw. dass ein mittels der Hebeeinrichtung aus einem Überbehälter eines AGV's herausgehobener und in die obere Förderebene verbrachter Warenbehälter von dort auf geeignete Weise an die Fördereichrichtung übergeben werden kann, um sodann mittels der Fördereinrichtung abtransportiert zu werden. Eine hinreichend präzise Positionierung des Warenbehälters auf den Ladezinken der Ladegabel kann durch entsprechende Anschläge an den Ladezinken unterstützt werden.

Die mittels üblicher Fördertechnik zu einer Verladestation angelieferten Warenbehälter können also in besonders flexibler Weise und ohne, dass hierzu in der unteren Förderebene separate Fördertechnik installiert sein muss, an einer (feststehend installierten) Verladestation an ein in der unteren Förderebene befindliches AGV übergebenen werden (durch Einladen von oben in den auf dem AGV montierten Überbehälter) und dort mittels eines AGV's zu beliebigen Orten (z.B. im Sinne des Anspruchs 3 zu einer Umladestation) verbracht werden.

Im Bereich der Umladestation können verschiedene AGV's mit Überbehälter und darin aufgenommenem Warenbehälter auf geeignete und möglichst gut zugängliche Weise so positioniert werden, damit dort auf effiziente Weise - entweder manuell (durch einen Menschen) oder automatisch (z.B. mittels einer geeigneten Handhabungsvorrichtung) - Waren zwischen verschiedenen Warenbehältern umgeladen werden können.

Ferner kann ein in einem Überbehälter eines AGV's befindlicher Warenbehälter (z.B. nach Abschluss eines Umladevorgangs) mittels des AGV's auf flexible Weise zu einer Verladestation verbracht werden, um dort auf einfache Weise aus dem Überbehälter entnommen und sodann wiederum an die dort in der oberen Förderebene befindliche Fördereinrichtung übergeben zu werden.

Zum Transport eines jeden Warenbehälters in der unteren Förderebene wird somit jeweils ein AGV mit einem darauf fest montierten Überbehälter benötigt, wobei es sich ggfs. auch anbieten könnte, dass auf einem AGV zwei Überbehälter zur Aufnahme je eines Warenbehälters montiert sind.

Ferner kann ein erfindungsgemäßes System bevorzugt mehrere Verladestationen aufweisen, um an verschiedenen Stellen eine Übergabe von Warenbehältern zwischen den in der unteren Förderebene fahrenden AGV's und den dort jeweils in der oberen Förderebene befindlichen Fördereinrichtungen zu ermöglichen.

Sind in einem Lager eine Mehrzahl an Verladestationen installiert und in geeigneter Weise an eine dort in der oberen Förderebene verlaufende Fördereinrichtung angebunden, so kann jedes AGV mit dem darauf installierten Überbehälter an einer ersten Verladestation einen dort angelieferten Warenbehälter entgegen nehmen und diesen zu einem späteren Zeitpunkt - beispielsweise nach erfolgter Umladung von Waren zwischen verschiedenen Warenbehältern - an einer anderen (oder auch an der gleichen) Verladestation wieder an die dort verlaufende Fördereinrichtung abgeben.

Ein erfindungsgemäß auf einem AGV fest montierter Überbehälter dient im erfindungsgemäßen Sinne der Aufnahme eines Warenbehälters und ist hierfür entsprechend gestaltet, wobei der Überbehälter ersichtlich so gestaltet sein muss, dass er das Einladen eines Warenbehälters gemäß einem Verfahren nach Anspruch 1 und/oder das Entnehmen eines Warenbehälters gemäß einem Verfahren nach Anspruch 2 gestattet.

Ein im Rahmen der Erfindung verwendbarer Überbehälter (mit typischerweise rechteckigem Querschnitt) weist dabei vorteilhaft vier Seitenwände auf, wobei in (wenigstens) einer Seitenwand zwei vom oberen Rand der Seitenwand vertikal nach unten erstreckende Vertikalschlitze vorgesehen sind, deren Abstand und Breite so gewählt ist, dass die zwei (sich stets horizontal erstreckenden) Ladezinken - bei geeigneter Positionierung des AGV samt Überbehälter an der Verladestation - zum Zwecke des Einladens eines Warenbehälters in den Überbehälter beim vertikalen Absenken der Ladegabel gemäß Schritt (C1) im Bereich der Vertikalschlitze ohne Kontakt zum Überbehälter in diesen hinein absenkbar sind.

Selbstverständlich müssen sich die beiden Vertikalschlitze in ihrer vertikalen Länge hierzu so weit bis in einen unteren Abschnitt des Überbehälters erstrecken, dass ein von den Ladezinken getragener Warenbehälter im Sinne des Verfahrensschritts (C1) im unteren Abschnitt des Überbehälters auf einer innerhalb des Überbehälters vorgesehenen Boden- oder Abstützstruktur absetzbar ist und dass die Ladezinken anschließend - ohne Kontakt zum Warenbehälter und Überbehälter durch Geradeausfahrt des AGV's im Sinne des Verfahrensschritts (D1) wieder seitlich aus dem Überbehälter ausfahren können. Auch die den Warenbehälter unterseitig stützende Boden- oder Abstützstruktur innerhalb des Überbehälters muss hierzu ersichtlich entsprechende Aussparungen / Vertiefungen aufweisen, damit die Ladezinken gemäß Schritt (C1) bis unter das Bodenniveau des innerhalb des Überbehälters abgestützten Warenbehälters abgesenkt werden können bzw. damit die geeignet positionierten Ladezinken bei Geradeausfahrt des AGV's gemäß Verfahrensschritt (B2) unterhalb des Warenbehälters durch die seitlichen Vertikalschlitze in den Überbehälter einfahren können.

In besonders zweckmäßiger Ausgestaltung der vorliegenden Erfindung kann vorgesehen sein, dass die lichte Weite der im Rahmen der Erfindung zur Verwendung kommenden Überbehälter etwas größer als die Außenabmessungen des in dem Überbehälter aufzunehmenden Warenbehälters ist, so dass bei zentrischer Positionierung des Warenbehälters in dem Überbehälter zwischen der Innenwand des Überbehälters und der Außenwand des darin aufgenommen Warenbehälters ein Spalt besteht. Hierdurch kann erreicht werden, dass bezüglich der Genauigkeit, mit der ein AGV in Verfahrensschritt (B1) zum Einladen eines Warenbehälters unterhalb des Warenbehälters positioniert werden muss, ein gewisses Spiel besteht.

In diesem Fall ist dann jedoch von besonderem Vorteil, wenn an der Innenwand des Überbehälters eine den umlaufenden Spalt zwischen Überbehälter und Warenbehälter zumindest weitgehend schließende Bürstenanordnung vorgesehen ist. Eine solche Bürstenanordnung kann verhindern, dass etwaige oben aus dem Warenbehälter herausschauende oder herausquellende Waren beim Transport des in dem Überbehälter befindlichen Warenbehälters mit dem AGV und/oder während des Umladens von Waren an einer Umladestation nicht in den Schlitz zwischen Überbehälter und Warenbehälter fallen können. Die Bürstenanordnung ist darüber hinaus ausreichend flexibel, um den vorstehenden Zweck auch dann zuverlässig zu erfüllen, wenn die Positionierung des Warenbehälters innerhalb des Überbehälters nicht exakt zentrisch erfolgt. Sie ist vorteilhaft auf einer solchen Höhe an der Innenwand des Überbehälters vorgesehen, dass die Bürsten der Außenseite des bestimmungsgemäß innerhalb des Überbehälters positionierten Warenbehälters im Bereich des oberen Rands oder knapp unterhalb des oberen Rands des Warenbehälters anliegen.

Ferner ist im Rahmen der Erfindung von Vorteil, wenn die Seitenwände des Überbehälters die Wände des in dem Überbehälter aufgenommenen Warenbehälters vertikal überragen. Die ist insbesondere dann von Vorteil, wenn - was in der Praxis häufig der Fall ist - übervolle Warenbehälter mit aus dem Warenbehälter nach oben hervorstehenden bzw. herausquellenden Waren (z.B. zu einer Umladestation oder von dieser weg) transportiert werden müssen.

In einer abermals bevorzugten Weiterbildung der vorliegenden Erfindung kann vorgesehen, dass beide Ladezinken der Ladegabel einer Verladeeinrichtung auf ihrer Oberseite ein motorisch angetriebenes Förderband aufweisen, mit welchem ein auf den Ladezinken abgestützter Warenbehälter in der oberen Förderebene an eine unmittelbar vor der Ladegabel befindliche Fördereinrichtung übergeben oder mit welchem ein in der oberen Förderebene von der Fördereinrichtung zugeführter Warenbehälter geeignet auf den Ladezinken positioniert werden kann. Die zwei - auf den beiden Ladezinken der Ladegabel - befindlichen Förderbänder sind dabei vorteilhaft durch einen Antriebsmotor angetrieben, der platzsparend, z.B. rückseitig an der Ladegabel, angeordnet werden und z.B. mittels einer geeigneten Busverbindung (z.B. CAN-Bus) an eine zentrale Steuereinheit für das erfindungsgemäße System angebunden werden kann.

Zu den im Rahmen der Erfindung verwendeten "Automated Guided Vehicles" (AGV's), die häufig auch fahrerlose Transportfahrzeuge genannt werden, sei noch erwähnt, dass solche AGV's aus dem Stand der Technik in vielfältigen Ausgestaltungen hinlänglich bekannt sind und bereits in vielfältiger Weise zum autonomen Warentransport in industriellen Lagern, Produktionsstätten oder Logistikzentren eingesetzt werden. Derartige AGV's, wie sie auch im Rahmen der vorliegenden Erfindung zum Einsatz kommen, können oberseitig einen Warenbehälter (oder vorliegend: einen Überbehälter für einen darin aufzunehmenden Warenbehälter) tragen, wobei der Warenbehälter dabei selbstverständlich mit Waren bestückt sein kann, und sind typischerweise mit einem geeigneten Antrieb ausgestattet, mit welche die AGV z.B. eine Geradeausfahrt in Vorwärts-/Rückwärtsrichtung und Drehungen ausführen kann.

Geeignete Steuer- bzw. Leitsysteme zur Steuerung des Fahrwegs und der sonstigen Funktionen solcher AGV's sind aus dem Stand der Technik ebenfalls bereits in vielfältiger und praxistauglicher Ausgestaltung bekannt.

Ersichtlich kann im Rahmen der vorliegenden Erfindung vorteilhaft vorgesehen sein, dass das erfindungsgemäße System eine zentrale oder verteilte Steuereinheit aufweist, welche dazu eingerichtet ist, das An- und Abtransportieren verschiedener Warenbehälter zu und von der wenigstens einen Verladestation mittels der jeweiligen Fördereinrichtung, den Antrieb etwaiger Förderbänder auf der Oberseite der Ladezinken der Ladegabeln der wenigstens einen Verladestation, den Einsatz des wenigstens einen AGV's unter geeigneter Vorgabe der hierfür zurückzulegenden Fahrwege und der hierfür notwendigen Ansteuerung des Antriebs der Hebeeinrichtung der wenigstens einen Verladestation (vollautomatisch) zu steuern.

Sowohl das wenigstens eine AGV als auch die Steuer- bzw. Leiteinheit sind vorteilhaft mit geeigneten bi-direktionalen Kommunikationsschnittstellen ausgestattet, die bevorzugt auf einem oder mehreren der hierfür üblicherweise zur Anwendung kommenden Datenkommunikationsstandards zur drahtlosen Kommunikation beruhen können. Die Antriebseinheiten der Hebeeinrichtung und etwaiger Förderbänder auf den Ladezinken der wenigstens einen Verladestation können ebenfalls entsprechende Kommunikationsschnittstellen zur drahtgebunden oder drahtlosen Kommunikation mit der zentralen Steuereinheit eingerichtet sein, was z.B. durch Anbindung mittels eines geeigneten Bussystems (z.B. CAN-Bus) möglich ist.

Als besonders hilfreich erweist es sich bei der Verwendung von AGV's mit optischer Sensorik, wenn im Bereich jeder Verladestation wenigstens eine durch das Transportfahrzeug geeignet erkennbare Bodenmarkierung angebracht ist, da hierdurch auf einfache Weise eine exakte Positionierung des AGV's an der Verladeposition gewährleistet werden kann. Ferner können die von dem AGV zu verwendenden Fahrwege durch geeignete, längs der Fahrwege angebrachte Bodenmarkierungen gekennzeichnet sein, was die zielgenaue Steuerung der Transportfahrzeuge auf den von ihm zurückzulegenden Fahrwegen erleichtert. Derartige Leitsysteme, die eine zuverlässige Navigation für AGV's unter Zuhilfenahme von Bodenmarkierungen und geeigneter Sensorik im/am AGV ermöglichen, sind aus dem Stand der Technik hinlänglich bekannt.

Nachfolgend werden Ausführungsbeispiele der Erfindung anhand der Zeichnungen näher erläutert. Dabei zeigen
- Fig. 1A-1C: ein erfindungsgemäß verwendbares AGV mit darauf montiertem Überbehälter in verschiedenen Ansichten,
- Fig. 2A: eine Verladestation in Draufsicht,
- Fig. 2B und 2C: eine Seitenansicht und eine Rückansicht auf die Verladestation aus Fig. 2A zusammen mit einem in der oberen Förderebene auf den Ladezinken befindlichen Warenbehälter und einem exakt darunter in der unteren Förderebene positioniertem AGV mit darauf montiertem Überbehälter,
- Fig. 3A-3D: verschiedene Seitenansichten auf eine Verladestation zur Erläuterung des Einladens eines Warenbehälters in einen auf einem AGV montierten Überbehälter,
- Fig. 4A-4D: verschiedene Seitenansichten auf eine Verladestation zur Erläuterung des Entladens eines Warenbehälters aus einem auf einem AGV montierten Überbehälter,
- Fig. 5A-5C: verschiedene (Teil-)Draufsichten auf ein erfindungsgemäßes System bei Durchführung eines erfindungsgemäßen Verfahrens zum Umladen von Waren zwischen verschiedenen Warenbehältern, und
- Fig. 6A u 6B: eine Draufsicht und eine Seitenansicht auf ein weiteres Ausführungsbeispiel einer Hebeeinrichtung, bei der die Ladezinken der Ladegabel mit einem Förderband ausgestattet sind.

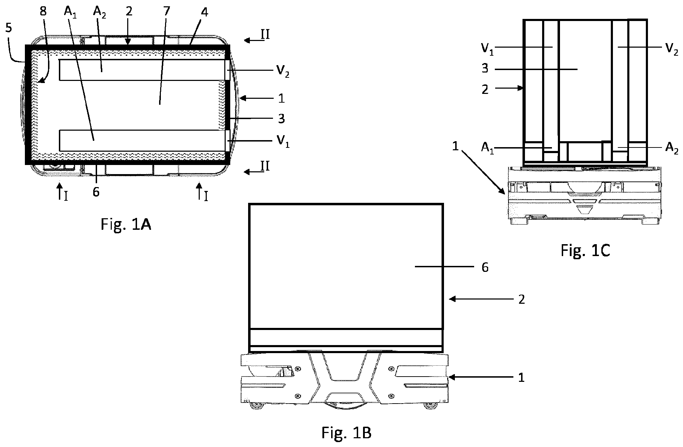

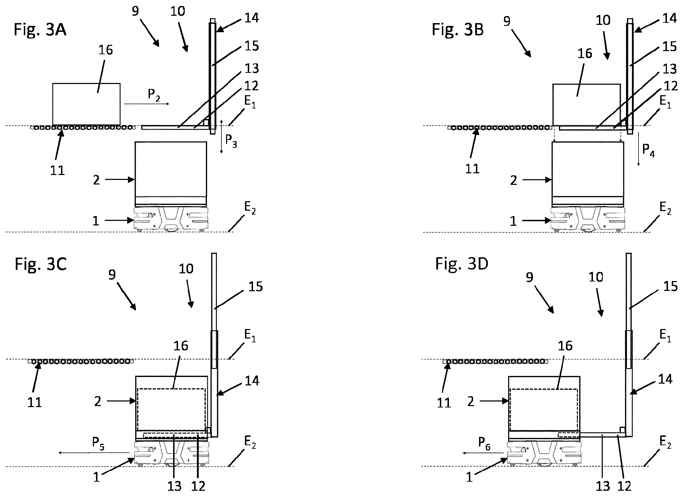

Die Fig. 1A zeigt ein im Rahmen der vorliegenden Erfindung zur Verwendung kommendes AGV 1 zusammen mit einem darauf montierten Überbehälter 2 in einer Draufsicht, wobei der Überbehälter 2 zur Aufnahme eines - in den Fig. 1A-C noch nicht dargestellten - Warenbehälters dient, was nachfolgend u.a. mit Bezug auf die Fig. 3A-3D noch näher erläutert wird. Die Fig. 1B und 1C zeigen das in Fig. 1A gezeigte AGV 1 mit Überbehälter 2 in zwei unterschiedlichen Seitenansichten gemäß Ansichtspfeilen I-I (Fig. 1B) bzw. Ansichtspfeilen II-II (Fig. 1C).

Der im Querschnitt rechteckige Überbehälter 2 weist vier Seitenwände 3, 4, 5, 6 auf und er ist nach oben geöffnet, so dass - was nachfolgend noch näher erläutert wird - ein Warenbehälter von oben in den Überbehälter 2 eingeladen werden kann. Der Überbehälter 2 weist in seinem Inneren eine Boden- bzw. Stützstruktur 7 auf, auf welcher ein Warenbehälter unterseitig abgestützt werden kann.

In der in Fig. 1A rechtsseitigen und in Fig. 1C dem Betrachter zugewandten Seitenwand 3 sind zwei vom oberen Rand der Seitenwand 3 bis zu einem unteren Bereich des Überbehälters 2 reichende Vertikalschlitze V₁, V₂ vorgesehen, welche beim Einladen und Ausladen eines Warenbehälters die Durchführung der den Warenbehälter tragenden Ladezinken in das Innere des Überbehälters 2 erlauben. Ferner sind in der Boden- bzw. Stützstruktur 7 Aussparungen A₁ und A₂ vorgesehen, die es erlauben, die Ladezinken unter das Niveau der Boden- bzw. Stützstruktur 7 abzusenken bzw. die Ladezinken unterhalb des auf der Boden- bzw. Stützstruktur 7 abgestützten Warenbehälters in den Überbehälter 2 einzuführen bzw. oder herauszuziehen, was erfindungsgemäß durch eine Geradeausfahrt des geeignet an einer Verladestation positionierten AGV's erfolgt, was nachstehend noch näher erläutert wird.

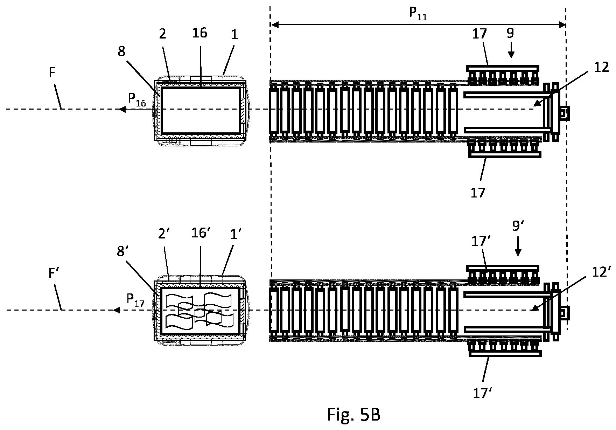

Ferner zeigt Fig. 1A noch eine an der Innenwand des Überbehälters 2 angebrachte Bürstenanordnung 8, mit welcher, was weiter unten anhand der Fig. 5B noch näher erläutert wird, ein sich zwischen Überbehälter 2 und einem darin aufgenommenen Warenbehälter ergebender Spalt verschlossen bzw. verdeckt wird, damit dort beim Transport des Warenbehälters oder beim Umladen von Waren keine Waren aus dem Warenbehälter hineinfallen können.

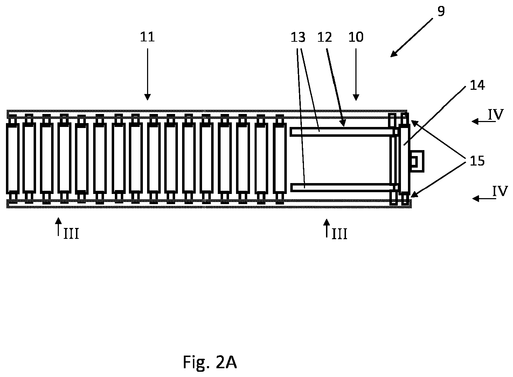

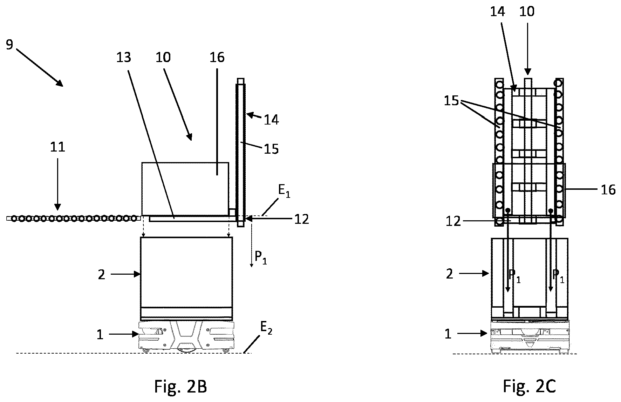

Fig. 2A zeigt eine im Rahmen der Erfindung verwendbare Verladestation 9 mit Hebeeinrichtung 10 und eine Fördereinrichtung 11 in einer Draufsicht, wobei die Fig. 2B und 2C wiederum die in Fig. 2A gezeigte Verladestation 9 in zwei unterschiedlichen Seitenansichten gemäß Ansichtspfeilen III-III (Fig. 2B; Seitenansicht) bzw. Ansichtspfeilen IV-IV (Fig. 2C; Rückansicht) zeigen.

Die Fördereinrichtung 11, bei welcher es sich im gezeigten Ausführungsbeispiel um einen Rollenförderer handelt, dient zum Zu- bzw. Abführen von (an anderen Stellen der Fördereinrichtung 11 zugeführten) Warenbehältern 16 zur bzw. von der Hebeeinrichtung 10 in einer oberen Förderebene E₁. Die Fördereinrichtung 11 führt deutlich weiter als dies in den verschiedenen Zeichnungen dargestellt ist und wird auf der der Hebeeinrichtung 10 abgewandten Seite auf geeignete Weise an die in einem Logistikzentrum, Umschlagslager etc. typischerweise ohnehin vorhandene Fördertechnik angebunden.

Die Hebeeinrichtung 10 der Verladestation 9 weist eine Ladegabel 12 mit zwei horizontal und parallel verlaufenden Ladezinken 13 auf, wobei die Ladegabel 12 an einer Grundstruktur 14 befestigt ist, die innerhalb zweier die Grundstruktur 14 beidseits stützenden Rollenanordnungen 15 zum Anheben und Absenken der Ladegabel 12 zwischen zwei der oberen Förderebene E₁ und der unteren Förderebene E₂ zugeordneten Endstellungen vertikal verfahrbar ist, was durch einen in den Fig. 2A-2C nicht dargestellten Antrieb bewerkstelligt werden kann.

Die Fig. 2B und 2C zeigen neben der Verladestation 9 auch einen auf den Ladezinken 13 der Ladegabel 12 positionierten Warenbehälter 16 und ein exakt unterhalb des Warenbehälters 16 geeignet positioniertes AGV 1 mit einem darauf befindlichen Überbehälter 2. Wenn nun die Ladegabel 12 mitsamt dem auf den Ladezinken 13 abgestützten Warenbehälter 16 gemäß den Pfeilen P₁ aus den Fig. 2B und 2C abgesenkt wird, dann kann der Warenbehälter 16 innerhalb des Überbehälters 2 abgesetzt werden, da die Ladezinken 13 während des gesamten Absenkvorgangs durch die Vertikalschlitze V₁, V₂ in den Innenraum des Überbehälters 2 hineinreichen können.

Das Einladen eines Warenbehälters 16 in den auf einem AGV montierten Überbehälter 2 und das Entnehmen eines in dem Überbehälter 2 befindlichen Warenbehälters 16 wird nachfolgend anhand der Fig. 3A-3D (Einladen) bzw. 4A-4D (Entnehmen) näher erläutert.

Zum Einladen eines Warenbehälters 16 in den auf einem AGV 1 montierten Überbehälter 2 muss zunächst im Sinne des Verfahrensschritts (A1) die gemäß Doppelpfeil P₃ aus Fig. 3A vertikal verfahrbare Ladegabel 12 der Verladestation 9 auf geeigneter Höhe in der oberen Förderebene E₁ positioniert werden, wie dies in Fig. 3A zu erkennen ist, und ein Warenbehälter 16 mittels der Fördereinrichtung 11 zu der Verladestation 9 in der oberen Förderebene E₂ gemäß Pfeil P₂ antransportiert werden (vgl. Fig. 3A), so dass der Warenbehälter 16 schließlich in einer bestimmungsgemäßen Position, welche durch geeignete Anschlagelemente vorgebbar ist, von der Ladegabel 12 bzw. den Ladezinken 13 getragen wird (vgl. Fig. 3B). Sodann muss im Sinne des Verfahrensschritts (B1), welcher auch zeitgleich oder vor dem Verfahrensschritt (A1) ausgeführt werden kann, das in der unteren Förderebene E₂ verfahrbare AGV 1 mit dem darauf montierten Überbehälter 2 zur Aufnahme des Warenbehälters 16 exakt unterhalb des in der oberen Förderebene E₁ von der Ladegabel 13 getragenen Warenbehälters 16 positioniert werden, wobei das AGV 1 und der Überbehälter 2 dabei ersichtlich auch so orientiert sein müssen, dass die Vertikalschlitze V₁, V₂ exakt unterhalb der beiden Ladezinken 13 der Ladegabel 12 angeordnet sind. Das AGV 1 ist in den Fig. 3A und 3B bereits erkennbar so positioniert. Daraufhin kann die Ladega-bel 12 und der darauf befindlichen Warenbehälter 16 gemäß Pfeil P₄ aus Fig. 3B vertikal in den darunter befindlichen Überbehälter 2 hinein abgesenkt werden, und zwar bis der Warenbehälter 16 unterseitig in dem Überbehälter 2 (durch die dortige Boden- bzw. Stützstruktur 7 - vgl. Fig. 1A) abgestützt ist und bis die in einem unteren Abschnitt des Überbehälters 2 in diesen hineinragenden Ladezinken 13 keinen Kontakt mehr zu dem innerhalb des Überbehälters 2 abgestützten Warenbehälter 16 haben (vgl. Fig. 3C). Dieses Absenken der Ladegabel 12 wird durch die zwei in einer seitlichen Wand 3 des Überbehälters 2 vorhandenen Vertikalschlitze V₁, V₂ und durch die Aussparungen A₁, A₂ in der Boden- bzw. Stützstruktur 7 des Überbehälters 2 ermöglicht. Sodann können die Ladezinken 13 im Sinne des Verfahrensschritts (D1) durch Geradeausfahrt des AGV's 1 gemäß Pfeil P₅ bzw. P₆ in Längsrichtung der Ladezinken 13 der ortsfest installierten Verladestation 9 (vgl. Fig. 3C und 3D) aus dem auf dem AGV 1 montierten Überbehälter 2 herausgefahren werden. Das AGV 1 samt darauf montiertem Überbehälter 2 und darin befindlichem Warenbehälter 16 ist sodann frei in der unteren Förderebene E₂ verfahrbar.

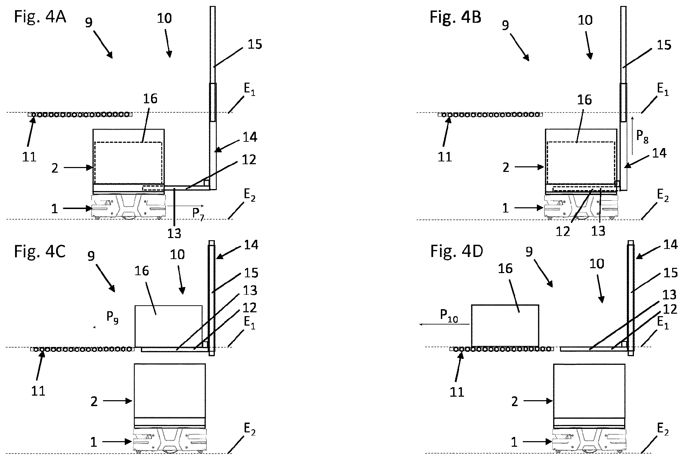

Zu der in den Fig. 4A-4D dargestellten Entnahme eines Warenbehälters 2 aus einem auf einem AGV 1 montierten Überbehälter 2 ist zunächst im Sinne des Verfahrensschritts (A2) die Ladegabel 13 der Verladestation 9 auf geeigneter Höhe in der unteren Förderebene E₂ zu positionieren (vgl. Fig. 4A) und das AGV 1 geeignet vor der Verladestation 9 zu positionieren. Sodann kann mittels Geradeausfahrt des AGV's 1 in Längsrichtung der Ladezinken 13 zur Verladestation 9 hin gemäß Pfeil P7 aus Fig. 4A dafür Sorge getragen werden, dass die Ladenzinken 13 der Ladegabel 12 aufgrund der Geradeausfahrt des AGV's 1 unterhalb des Warenbehälters 16 durch die Vertikalschlitze V₁, V₂ in der Seitenwand 3 des Überbehälters 2 in einen unteren Abschnitt des Überbehälters 2 einfahren (vgl. Fig. 4A und 4B). Anschließend erfolgt gemäß Verfahrensschritt (C2) ein vertikales Anheben der Ladegabel 12 bis in die obere Förderebene E₁, so dass der dabei von der Ladegabel 12 getragene Warenbehälter 16 nach oben aus dem Überbehälter 2 herausgehoben und bis in die obere Förderebene E₁ angehoben wird (vgl. Fig. 4C). Sodann kann der Warenbehälter 16 im Sinne des Verfahrensschrittes (D2) gemäß Pfeilen P₉ und P₁₀ aus den Fig. 4C und 4D an die in der oberen Förderebene E₁ befindliche Fördereinrichtung 11 zum Weitertransport des Warenbehälters 16 übergeben werden.

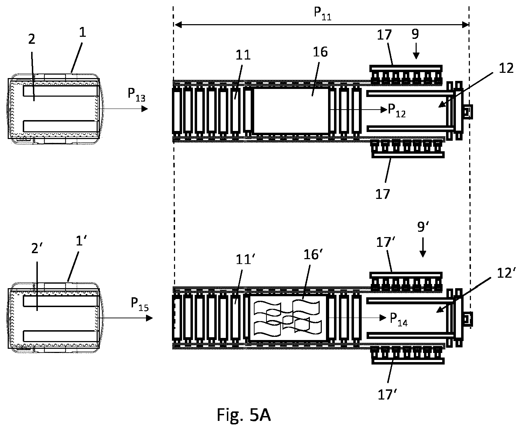

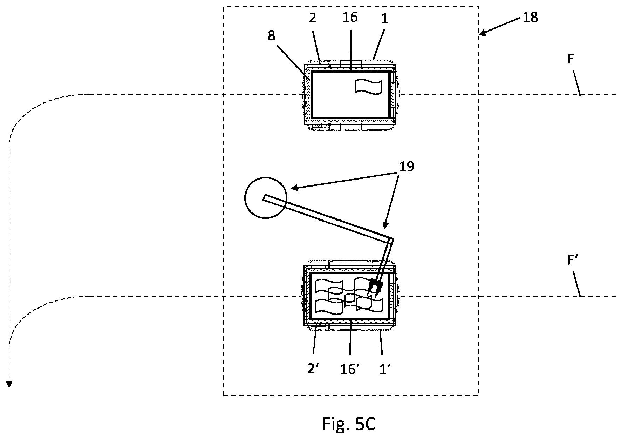

Die Fig. 5A, 5B und 5C veranschaulichen schließlich in einer Draufsicht nochmals ein weiteres Ausführungsbeispiel der Erfindung, bei dem zwei Verladestationen 9 und 9' der bereits beschriebenen Art vorgesehen sind, wobei in den Fig. 5A und 5B der durch den Doppelpfeil P₁₁ gekennzeichnete Bereich eine Draufsicht auf die obere Förderebene E₁ zeigt, während der links daneben liegende Bereich jeweils ausschließlich eine Draufsicht auf die untere Förderebene E₂ zeigt, so dass dort der weitere Verlauf der zu den Verladestationen 9 bzw. 9' führenden Fördereinrichtungen 11 bzw. 11' nicht erkennbar ist.

Im oberen Bereich von Fig. 5A wird durch die als Rollenförderer ausgestaltete Fördereinrichtung 11 ein leerer Warenbehälter 16 in Richtung des Pfeils P₁₂ zur in Fig. 5A oben dargestellten Verladestation 9 gefördert. Im unteren Bereich von Fig. 5A wird durch die als Rollenförderer ausgestaltete Fördereinrichtung 11' ein mit Waren befüllter Warenbehälter 16 in Richtung des Pfeils P₁₄ zur in Fig. 5A unten dargestellten Verladestation 9' gefördert. An beiden Verladestationen sind in der oberen Förderebene E₁ beidseits der Ladegabel 12 bzw. 12' je zwei seitliche Führungselemente 17 bzw. 17' mit Rollenantrieb vorgesehen, mit deren Hilfe der von der jeweiligen Fördereinrichtung 11 bzw. 11' angelieferte Warenbehälter 16 bzw. 16' lagerecht auf der jeweiligen Ladegabel 12 bzw. 12' positioniert werden kann. In der unteren Förderebene E₂ befinden sich zwei AGV's 1, 1' mit jeweils einem darauf montierten Überbehälter 2, 2' der bereits weiter oben beschriebenen Art, die in Richtung der Pfeile P₁₃ bzw. P₁₅ ebenfalls zu je einer Verladestation 9 bzw. 9' bewegt werden, um dort exakt unterhalb der Stelle, an welcher die Warenbehälter 16 bzw. 16' auf der jeweiligen Ladegabel 12 bzw. 12' positioniert werden, Position zu beziehen. Dann kann durch Absenken der Ladegabeln 12, 12' der jeweilige Warenbehälter 16, 16' in den darunter befindlichen Überbehälter 2, 2' eingeladen werden, wie bereits beschrieben.

Anschließend können die AGV's 1, 1' samt darauf befindlichem Überbehälter 2, 2' und darin befindlichem Warenbehälter 16 bzw. 16' wieder von der Verladestation 9 bzw. 9 ' fortbewegt werden (vgl. Fig. 5B). In Fig. 5B ist im Übrigen gut zu erkennen, dass die an einer Innenwand des Überbehälters 2 bzw. 2' vorgesehenen Bürstenanordnungen 8 bzw. 8' zumindest weitgehend den umlaufenden Spalt (außer im Bereich der Vertikalschlitze V₁, V₂) zwischen Überbehälter 2 bzw. 2' und dem darin aufgenommenen Warenbehälter 16 bzw. 16' verschließen.

Anschließend können die mit je einem Warenbehälter 16, 16' beladenen AGV's 1, 1' gemäß dem jeweiligen Pfeil P₁₆, P₁₇ (vgl. Fig. 5C) auf einem ihnen jeweils zugeordneten Fahrweg F bzw. F' zu einer Umladestation 18 verfahren werden (vgl. Fig. 5C). An der Umladestation können dann - entweder automatisch mittels eines schematisch dargestellten Handhabungsroboters 19 oder aber manuell durch geeignetes Personal - Waren aus dem gefülltem Warenbehälter 16' in den zuvor leeren Warenbehälter 16 umgeladen werden. Ersichtlich können ggfs. auch mehr als zwei AGV's mit Über- und Warenbehältern an eine Umladestation 18 verfahren werden, um dort Waren zwischen mehreren Warenbehältern umzuladen.

Nach Durchführung der gewünschten Umladevorgänge können dann die verschiedenen AGV's 1, 1' wiederum zu einer der Verladestationen 9, 9' oder aber zu einer weiteren (nicht dargestellten) Verladestation verfahren werden, um dort die jeweiligen Warenbehälter 16, 16' wieder zum Zwecke des Weitertransports an die in der oberen Förderebene E₁ befindliche Fördereinrichtung 11, 11' zu übergeben.

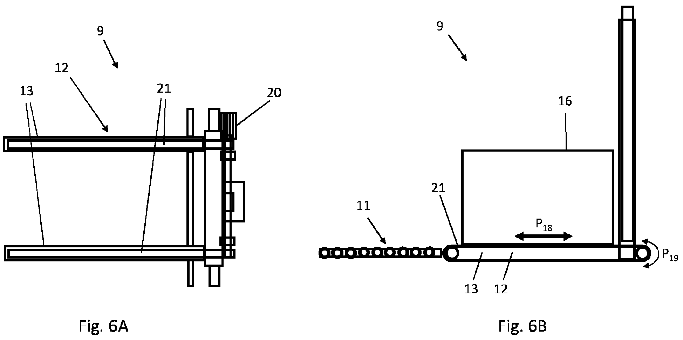

Die Fig. 6A und 6B zeigen schließlich noch ein weiteres Ausführungsbeispiel einer erfindungsgemäßen Verladestation 9, bei welcher auf der Oberseite der beiden Ladezinken 13 der Ladegabel 12 jeweils ein durch eine Antriebseinheit 20 angetriebenes Förderband 21 vorgesehen ist, mit welchen ein auf den Ladezinken 13 abgestützter Warenbehälter 16 in der oberen Förderebene E₁ an eine unmittelbar vor der Ladegabel 12 befindliche Fördereinrichtung 11 übergeben oder mit welchem ein in der oberen Förderebene E₁ von der Fördereinrichtung 11 zugeführter Warenbehälter 16 (unter Zuhilfenahme geeigneter Anschläge) geeignet auf den Ladezinken 13 positioniert werden kann. Die Doppelpfeile P₁₈, P₁₉ zeigen, dass das Förderband 21 in verschiedene Laufrichtungen bewegbar ist, um den Warenbehälter 16 auf der Ladegabel 12 in verschiedenen Richtungen bewegen zu können.

## Patentansprüche

1. Verfahren zum Einladen eines Warenbehälters (16) in einen auf einem AGV (1) montierten Überbehälter (2) an einer ortsfest montierten Verladestation (9), wobei die Verladestation (9) eine Hebeeinrichtung (10) mit einer zwischen einer oberen Förderebene (E₁) und einer unteren Förderebene (E₂) vertikal verfahrbaren Ladegabel (12) mit zwei Ladezinken (13) aufweist, mit den folgenden Schritten:
(A1) Positionieren der Ladegabel (12) der Verladestation (9) auf geeigneter Höhe in der oberen Förderebene (E₁) und Antransportieren des Warenbehälters (16) zu der Verladestation (9) in der oberen Förderebene (E₁) mittels einer Fördereinrichtung (11) bis der Warenbehälter (16) von der Ladegabel (12) getragen wird;
(B1) Positionieren eines in der unteren Förderebene (E₂) verfahrbaren AGV (1) mit einem darauf montierten Überbehälter (2) zur Aufnahme des Warenbehälters (16) exakt unterhalb des in der oberen Förderebene (E₁) von der Ladegabel (12) getragenen Warenbehälters (16);
(C1) Vertikales Absenken der Ladegabel (12) und des darauf befindlichen Warenbehälters (16) in den darunter befindlichen Überbehälter (2) hinein bis der Warenbehälter (16) unterseitig in dem Überbehälter (2) abgestützt ist und bis die in einem unteren Abschnitt des Überbehälters (2) in diesen hineinragenden Ladezinken (13) keinen Kontakt mehr zu dem innerhalb des Überbehälters (2) abgestützten Warenbehälter (16) haben,
wobei der Überbehälter (2) zur Ermöglichung des Absenkens der Ladegabel (12) in einer seitlichen Wand (3) zwei von der Oberkante der Wand (3) bis zum unteren Abschnitt reichende Vertikalschlitze (V₁, V₂) aufweist;
(D1) Geradeausfahrt des AGV's (1) mit dem darauf befindlichem Überbehälter (2) und dem innerhalb des Überbehälters (2) befindlichen Warenbehälter (16) in Längsrichtung der Ladezinken (13) von der Verladestation (9) weg, so dass die Ladenzinken (13) der ortsfest montierten Verladestation (9) aufgrund der Geradeausfahrt des AGV's (1) aus dem Überbehälter (2) herausgefahren werden.

2. Verfahren zur Entnahme eines Warenbehälters (16) aus einem auf einem AGV (1) montierten Überbehälter (2) an einer ortsfest montierten Verladestation (9), wobei die Verladestation (9) eine Hebeeinrichtung (10) mit einer zwischen einer oberen Förderebene (E₁) und einer unteren Förderebene (E₂) vertikal verfahrbaren Ladegabel (12) mit zwei Ladezinken (13) aufweist, mit den folgenden Schritten:
(A2) Positionieren der Ladegabel (12) der Verladestation auf geeigneter Höhe in der unteren Förderebene (E₂) und Positionieren eines AGV (1) mit einem darauf montierten Überbehälter (2) und dem innerhalb des Überbehälters (2) befindlichen Warenbehälter (16) vor der Verladestation (9);
(B2) Geradeausfahrt des AGV's in Längsrichtung der Ladezinken (13) zur Verladestation hin, so dass die Ladenzinken (13) der Ladegabel (12) aufgrund der Geradeausfahrt des AGV's (1) unterhalb des Warenbehälters (16) durch Vertikalschlitze (V₁, V₂) in einer seitlichen Wand (3) des Überbehälters (2) in einen unteren Abschnitt des Überbehälters (2) einfahren;
(C2) Vertikales Anheben der Ladegabel (12) bis in die obere Förderebene (E₁), so dass der beim Anheben von der Ladegabel (12) getragene Warenbehälter (16) nach oben aus dem Überbehälter (2) herausgehoben und bis in die obere Förderebene (E₁) angehoben wird, wobei sich die Vertikalschlitze (V₁, V₂) in einer seitlichen Wand (3) des Überbehälters zur Ermöglichung des Heraushebens der Ladegabel (12) bis zum oberen Rand der Wand (3) erstrecken;
(D2) Übergabe des Warenbehälters (16) an eine in der oberen Förderebene (E₁) befindliche Fördereinrichtung (11) zum Weitertransport des Warenbehälters (16) in der oberen Förderebene (E₁).

3. Verfahren zum Umladen von in Warenbehältern (16') angelieferten Waren in andere Warenbehälter (16) an einer Umladestation (18) umfassend die folgenden Schritte:
(A3) Einladen eines ersten mit den umzusortierenden Waren befüllten Warenbehälters (16') in einen auf einem ersten AGV (1') montierten Überbehälter (2') an einer ortsfest montierten Verladestation (9') gemäß einem Verfahren nach Anspruch 1;
(B3) Einladen eines zweiten, leeren Warenbehälters (16) in einen auf einem zweiten AGV (1) montierten Überbehälter (2) an einer ortsfest montierten Verladestation (9) gemäß einem Verfahren nach Anspruch 1;
(C3) Optional, Einladen wenigstens eines weiteren leeren oder mit Waren gefüllten Warenbehälters (16, 16') in je einen auf einem weiteren AGV (1, 1') montierten Überbehälter (2, 2') an einer ortsfest montierten Verladestation (9, 9') gemäß einem Verfahren nach Anspruch 1;
(D3) Verfahren der wenigstens zwei AGV's (1, 1') mit den darauf befindlichen Über- und Warenbehältern in der unteren Förderebene (E₂) zu einer Umladestation (18);
(E3) Manuelles oder automatisches Umladen von Waren aus dem ersten Warenbehälter (16') in den zweiten Warenbehälter (16) an der Umladestation (18) und, optional, Umladen von weiteren Waren zwischen den verschiedenen Warenbehältern (16, 16'), bis der zweite Warenbehälter (16) mit den gewünschten Waren befüllt ist;
(F3) Nach Abschluss des Umladens der Waren, Verfahren der verschiedenen AGV's (1, 1') mit Über- und Warenbehältern zu einer Verladestation (9, 9') und Entnahme des jeweiligen Warenbehälters (16, 16') aus dem auf dem jeweiligen AGV (1, 1') montierten Überbehälter (2, 2') gemäß einem Verfahren nach Anspruch 2.

4. System zum Einladen eines Warenbehälters (16) in einen auf einem AGV (1) montierten Überbehälter (2) hinein und zur Entnahme eines Warenbehälters (16) aus einem auf einem AGV (1) montierten Überbehälter (2) umfassend:
- eine ortsfest montierte Verladestation (9) mit einer Hebeeinrichtung (10), die eine zwischen einer oberen Förderebene (E₁) und einer unteren Förderebene (E₂) vertikal verfahrbare Ladegabel (12) mit zwei Ladezinken (13) aufweist,
- eine Fördereinrichtung (11) zum An- und Abtransport von Warenbehältern in der oberen Förderebene (E₁) zu der Verladestation (9) hin oder von dieser weg,
- wenigstens ein in der unteren Förderebene (E₂) verfahrbares AGV (1) mit einem darauf montierten Überbehälter (2),
wobei der Überbehälter (2) in einer seitlichen Wand (3) wenigstens zwei bis zum oberen Rand reichende Vertikalschlitze (V₁, V₂) aufweist und derart gestaltet ist, dass
(a) zum Einladen eines Warenbehälters (16) in den auf dem AGV (1) montierten Überbehälter (2) die einen Warenbehälter (16) tragenden Ladezinken (13) der Hebeeinrichtung (10) bei geeigneter Positionierung des AGV (1) vertikal abgesenkt werden können, bis der Warenbehälter (16) unterseitig in dem Überbehälter (2) abgestützt ist und bis die in einem unteren Abschnitt des Überbehälters (2) durch die Vertikalschlitze (V₁, V₂) in diesen hineinragenden Ladezinken (13) keinen Kontakt mehr zum Warenbehälter (16) haben und anschließend durch Geradeausfahrt des AGV's (1) aus dem Überbehälter (2) linear herausgefahren werden können
und
(b) zur Entnahme eines Warenbehälters (16) aus dem auf dem AGV (1) montierten Überbehälter (2) die Ladenzinken (13) der Ladegabel (12) bei geeigneter Geradeausfahrt des AGV's (10) unterhalb des Warenbehälters (16) durch die Vertikalschlitze (V₁, V₂) in einen unteren Abschnitt des Überbehälters (2) einfahren und anschließend mitsamt dem Warenbehälter (16) angehoben werden können, bis der Warenbehälter (16) nach oben aus dem Überbehälter (2) entnommen wurde.

5. System nach Anspruch 4,
**dadurch gekennzeichnet,**
**dass** die lichte Weite des Überbehälters (2) etwas größer ist als die Außenabmessungen des Warenbehälters (16) sind, so dass bei zentrischer Positionierung des Warenbehälters (16) in dem Überbehälter (2) zwischen der Innenwand des Überbehälters (2) und der Außenwand des darin aufgenommen Warenbehälters (16) ein Spalt besteht.

6. System nach Anspruch 5,
**dadurch gekennzeichnet,**
**dass** an der Innenwand des Überbehälters eine den umlaufenden Spalt zwischen Überbehälter (2) und Warenbehälter (16) zumindest weitgehend schließende Bürstenanordnung (8) vorgesehen ist.

7. System nach einem der Ansprüche 4 bis 6,
**dadurch gekennzeichnet,**
**dass** die Seitenwände des Überbehälters (3, 4, 5, 6) die Wände des in dem Überbehälter (2) aufgenommenen Warenbehälters (16) vertikal überragen.

8. System nach einem der Ansprüche 4 bis 7,
**dadurch gekennzeichnet,**
**dass** beide Ladezinken (13) der Ladegabel (12) auf ihrer Oberseite ein motorisch angetriebenes Förderband (21) aufweisen, mit welchem ein auf den Ladezinken (13) abgestützter Warenbehälter (16) in der oberen Förderebene (E₁) an eine unmittelbar vor der Ladegabel (12) befindliche Fördereinrichtung (11) übergeben oder mit welchem ein in der oberen Förderebene (E₁) von der Fördereinrichtung (11) zugeführter Warenbehälter (16) geeignet auf den Ladezinken (13) positioniert werden kann.

## Claims

1. Method for loading a goods container (16) into an overcontainer (2) mounted on an AGV (1) at a fixedly mounted loading station (9), wherein the loading station (9) has a lifting device (10) with a loading fork (12) with two loading tines (13) which can be moved vertically between an upper conveying level (E₁) and a lower conveying level (E₂), with the following steps:
(A1) Positioning the loading fork (12) of the loading station (9) at a suitable height in the upper conveying level (E₁) and transporting the goods container (16) to the loading station (9) in the upper conveying level (E₁) by means of a conveyor device (11) until the goods container (16) is carried by the loading fork (12);
(B1) Positioning of an AGV (1) travelling in the lower conveying plane (E₂) with an overcontainer (2) mounted thereon for receiving the goods container (16) exactly below the goods container (16) carried by the loading fork (12) in the upper conveying level (E₁);
(C1) Vertical lowering of the loading fork (12) and the goods container (16) located thereon into the overcontainer (2) located below until the goods container (16) is supported on the underside in the overcontainer (2) and until the loading tines (13) projecting into a lower section of the overcontainer (2) no longer have any contact with the goods container (16) supported inside the overcontainer (2),
wherein the overcontainer (2) has two vertical slots (V₁, V₂) in a side wall (3) extending from the upper edge of the wall (3) to the lower section to enable the loading fork (12) to be lowered;
(D1) Straight-ahead travel of the AGV (1) with the overcontainer (2) located thereon and the goods container (16) located inside the overcontainer (2) in the longitudinal direction of the loading tines (13) away from the loading station (9), so that the loading tines (13) of the stationarily mounted loading station (9) are moved out of the overcontainer (2) due to the straight-ahead travel of the AGV (1).

2. Method for removing a goods container (16) from an overcontainer (2) mounted on an AGV (1) at a fixedly mounted loading station (9), the loading station (9) having a lifting device (10) with a loading fork (12) with two loading tines (13) which can be moved vertically between an upper conveying level (E₁) and a lower conveying level (E₂), having the following steps:
(A2) Positioning the loading fork (12) of the loading station at a suitable height in the lower conveying level (E₂) and positioning an AGV (1) with an overcontainer (2) mounted on it and the goods container (16) located inside the overcontainer (2) in front of the loading station (9);
(B2) Straight-ahead travel of the AGV in the longitudinal direction of the loading tines (13) towards the loading station, so that the loading tines (13) of the loading fork (12) enter a lower section of the overcontainer (2) through vertical slots (V₁, V₂) in a side wall (3) of the overcontainer (2) due to the straight-ahead travel of the AGV (1) below the goods container (16);
(C2) Vertical lifting of the loading fork (12) up to the upper conveying level (E₁), so that the goods container (16) carried by the loading fork (12) during lifting is lifted upwards out of the overcontainer(2) and lifted up to the upper conveying level (E₁), wherein the vertical slots (V₁, V₂) extend in a side wall (3) of the overcontainer up to the upper edge of the wall (3) to enable the loading fork (12) to be lifted out;
(D2) Transfer of the goods container (16) to a conveyor device (11) located in the upper conveying level (E₁) for further transport of the goods container (16) in the upper conveying level (E₁).

3. Method for reloading goods delivered in goods containers (16') into other goods containers (16) at a reloading station (18), comprising the following steps:
(A3) Loading of a first goods container (16') filled with the goods to be re-sorted into an overcontainer (2') mounted on a first AGV (1') at a stationarily mounted loading station (9') according to a method according to claim 1;
(B3) Loading of a second, empty goods container (16) into an overcontainer (2) mounted on a second AGV (1) at a stationarily mounted loading station (9) according to a method according to claim 1;
(C3) Optionally, loading of at least one further empty or goods-filled goods container (16, 16') into a respective overcontainer (2, 2') mounted on a further AGV (1, 1') at a stationarily mounted loading station (9, 9') according to a method according to claim 1;
(D3) Moving the at least two AGVs (1, 1') with the overcontainers and goods containers located thereon in the lower conveying level (E₂) to a reloading station (18);
(E3) Manual or automatic reloading of goods from the first goods container (16') into the second goods container (16) at the reloading station (18) and, optionally, reloading of further goods between the various goods containers (16, 16') until the second goods container (16) is filled with the desired goods;
(F3) After completion of the reloading of the goods, movement of the various AGVs (1, 1') with overcontainers and goods containers to a loading station (9, 9') and removal of the respective goods container (16, 16') from the overcontainer (2, 2') mounted on the respective AGV (1, 1') according to a method according to claim 2.

4. System for loading a goods container (16) into an overcontainer (2) mounted on an AGV (1) and for removing a goods container (16) from an overcontainer (2) mounted on an AGV (1), comprising:
- a stationarily mounted loading station (9) with a lifting device (10), which has a loading fork (12) with two loading tines (13) that can be moved vertically between an upper conveying level (E₁) and a lower conveying level (E₂),
- a conveyor device (11) for transporting goods containers in the upper conveying level (E₁) to and from the loading station (9),
- at least one AGV (1) movable in the lower conveying level (E₂) with an overcontainer (2) mounted on it,
wherein the overcontainer (2) has at least two vertical slots (V₁, V₂) in a side wall (3) extending up to the upper edge and is designed in such a way that
(a) for loading a goods container (16) into the overcontainer (2) mounted on the AGV (1), the loading tines (13) of the lifting device (10) carrying a goods container (16) can be lowered vertically when the AGV (1) is suitably positioned, until the goods container (16) is supported on the underside in the overcontainer (2) and until the loading tines (13) projecting into a lower section of the overcontainer (2) through the vertical slots (V₁, V₂) no longer have any contact with the goods container (16) and can then be moved linearly out of the overcontainer (2) by the AGV (1) travelling straight ahead
and
(b) for removing a goods container (16) from the overcontainer (2) mounted on the AGV (1), the loading tines (13) of the loading fork (12) can enter into a lower section of the overcontainer (2) through the vertical slots (V₁, V₂) and can then be lifted together with the goods container (16) until the goods container (16) has been removed upwards from the overcontainer (2).

5. System according to claim 4,
**characterised in that**
the clear width of the overcontainer (2) is slightly larger than the outer dimensions of the goods container (16), so that when the goods container (16) is positioned centrally in the overcontainer (2), there is a gap between the inner wall of the overcontainer (2) and the outer wall of the goods container (16) accommodated therein.

6. System according to claim 5,
**characterised in that**
a brush arrangement (8) at least largely closing the circumferential gap between the overcontainer (2) and the goods container (16) is provided on the inner wall of the overcontainer.

7. System according to any one of claims 4 to 6,
**characterised in that**
the side walls of the overcontainer (3, 4, 5, 6) project vertically beyond the walls of the goods container (16) accommodated in the overcontainer (2).

8. System according to any one of claims 4 to 7,
**characterised in that**
both loading tines (13) of the loading fork (12) have a motor-driven conveyor belt (21) on their upper side, with which a goods container (16) supported on the loading tines (13) can be transferred in the upper conveying level (E₁) to a conveying device (11) located directly in front of the loading fork (12) or with which a goods container (16) fed in the upper conveying level (E₁) by the conveying device (11) can be suitably positioned on the loading tines (13).

## Revendications

1. Procédé de chargement d'un conteneur de marchandises (16) dans un conteneur extérieur (2) monté sur un AGV (1) dans une station de chargement (9) montée fixement, dans lequel la station de chargement (9) présente un dispositif de levage (10) comprenant une fourche de chargement (12) dotée de deux dents de chargement (13), laquelle est déplaçable verticalement entre un plan de transport supérieur (E₁) et un plan de transport inférieur (E₂), comprenant les étapes suivantes :
(A1) positionnement de la fourche de chargement (12) de la station de chargement (9) à une hauteur appropriée dans le plan de transport supérieur (E₁) et transport du conteneur de marchandises (16) vers la station de chargement (9) dans le plan de transport supérieur (E₁) au moyen d'un dispositif de transport (11) jusqu'à ce que le conteneur de marchandises (16) soit supporté par la fourche de chargement (12) ;
(B1) positionnement d'un AGV (1) déplaçable dans le plan de transport inférieur (E₂) avec un conteneur extérieur (2) monté sur celui-ci pour la réception du conteneur de marchandises (16) exactement sous le conteneur de marchandises (16) supporté par la fourche de chargement (12) dans le plan de transport supérieur (E₁) ;
(C1) abaissement vertical de la fourche de chargement (12) et du conteneur de marchandises (16) situé sur celle-ci dans le conteneur extérieur (2) situé dessous, jusqu'à ce que le conteneur de marchandises (16) soit soutenu par le côté inférieur dans le conteneur extérieur (2) et jusqu'à ce que les dents de chargement (13) faisant saillie dans le conteneur extérieur (2) dans une section inférieure de celui-ci ne soient plus en contact avec le conteneur de marchandises (16) soutenu à l'intérieur du conteneur extérieur (2),
dans lequel, pour faciliter l'abaissement de la fourche de chargement (12), le conteneur extérieur (2) présente des fentes verticales (V₁, V₂) dans une paroi latérale (3), lesquelles s'étendent à partir du bord supérieur de la paroi (3) jusqu'à la section inférieure ;
(D1) déplacement en ligne droite de l'AGV (1), avec le conteneur extérieur (2) placé sur celui-ci et le conteneur de marchandises (16) placé dans le conteneur extérieur (2), dans la direction longitudinale des dents de chargement (13), à distance de la station de chargement (9), de sorte que les dents de chargement (13) de la station de chargement (9) montée fixement sortent du conteneur extérieur (2) en raison du déplacement en ligne droite de l'AGV (1).

2. Procédé de retrait d'un conteneur de marchandises (16) hors d'un conteneur extérieur (2) monté sur un AGV (1) dans une station de chargement (9) montée fixement, dans lequel la station de chargement (9) présente un dispositif de levage (10) comprenant une fourche de chargement (12) dotée de deux dents de chargement (13), laquelle est déplaçable verticalement entre un plan de transport supérieur (E₁) et un plan de transport inférieur (E₂), comprenant les étapes suivantes :
(A2) positionnement de la fourche de chargement (12) de la station de chargement (9) à une hauteur appropriée dans le plan de transport inférieur (E₂) et positionnement d'un AGV (1) devant la station de chargement (9), avec un conteneur extérieur (2) monté sur celui-ci et le conteneur de marchandises (16) placé à l'intérieur du conteneur de marchandises (16) ;
(B2) déplacement en ligne droite de l'AGV vers la station de chargement dans la direction longitudinale des dents de chargement (13), de sorte que les dents de chargement (13) de la fourche de chargement (12) s'introduisent dans une section inférieure du conteneur extérieur (2) à travers des fentes verticales (V₁, V₂) dans une paroi latérale (3) du conteneur extérieur (2), en raison du déplacement en ligne droite de l'AGV (1) sous le conteneur de marchandises (16) ;
(C2) relèvement vertical de la fourche de chargement (12) jusque dans le plan de transport supérieur (E₁), de sorte que le conteneur de marchandises (16) supporté par la fourche de chargement (12) lors du relèvement est soulevé vers le haut hors du conteneur extérieur (2) et relevé jusque dans le plan de transport supérieur (E₁), dans lequel les fentes verticales (V₁, V₂) s'étendent dans une paroi latérale (3) du conteneur extérieur pour permettre le retrait de la fourche de chargement (12) jusqu'au bord supérieur de la paroi (3) ;
(D2) remise du conteneur de marchandises (16) à un dispositif de transport (11) situé dans le plan de transport supérieur (E₁) pour le transport ultérieur du conteneur de marchandises (16) dans le plan de transport supérieur (E₁).

3. Procédé de transbordement de marchandises livrées dans des conteneurs de marchandises (16') vers d'autres conteneurs de marchandises (16) dans une station de transbordement (18), comportant les étapes suivantes :
(A3) chargement d'un premier conteneur de marchandises (16') rempli de marchandises à trier dans un conteneur extérieur (2') monté sur un premier AGV (1') dans une station de chargement (9') montée fixement, conformément à un procédé selon la revendication 1 ;
(B3) chargement d'un deuxième conteneur de marchandises vide (16) dans un conteneur extérieur (2) monté sur un deuxième AGV (1) dans une station de chargement (9) montée fixement, conformément à un procédé selon la revendication 1 ;
(C3) optionnellement, chargement d'au moins un autre conteneur de marchandises (16, 16') vide ou rempli de marchandises respectivement dans un conteneur extérieur (2, 2') monté sur un autre AGV (1, 1') dans une station de chargement (9, 9') montée fixement, conformément à un procédé selon la revendication 1 ;
(D3) déplacement des au moins deux AGV (1, 1') avec les conteneurs de marchandises et extérieurs placés sur ceux-ci dans le plan de transport inférieur (E₂) vers une station de transbordement (18) ;
(E3) transbordement manuel ou automatique de marchandises hors du premier conteneur de marchandises (16') vers le deuxième conteneur de marchandises (16) au niveau de la station de transbordement (18) et, optionnellement, transbordement d'autres marchandises entre les différents conteneurs de marchandises (16, 16'), jusqu'à ce que le deuxième conteneur de marchandises (16) soit rempli avec les marchandises souhaitées ;
(F3) après achèvement du transbordement des marchandises, déplacement des différents AGV (1, 1') avec les conteneurs de marchandises et extérieurs vers une station de chargement (9, 9') et retrait du conteneur de marchandises (16, 16') respectif hors du conteneur extérieur (2, 2') monté sur l'AGV (1, 1') respectif, conformément à un procédé selon la revendication 2.

4. Système de chargement d'un conteneur de marchandises (16) dans un conteneur extérieur (2) monté sur un AGV (1) et de retrait d'un conteneur de marchandises (16) hors d'un conteneur extérieur (2) monté sur un AGV (1), comportant :
- une station de chargement (9) montée fixement, avec un dispositif de levage (10) présentant une fourche de chargement (12) dotée de deux dents de chargement (13), laquelle est déplaçable entre un plan de transport supérieur (E₁) et un plan de transport inférieur (E₂),
- un dispositif de transport (11) pour la livraison et l'enlèvement de conteneurs de marchandises dans le plan de transport supérieur (E₁) vers et à partir de la station de chargement (9),
- au moins un AGV (1) déplaçable dans le plan de transport inférieur (E₂), avec un conteneur extérieur (2) monté sur celui-ci,
dans lequel, dans une paroi latérale (3), le conteneur extérieur (2) présente au moins deux fentes verticales (V₁, V₂) s'étendant jusqu'au bord supérieur, tout en étant conçu de telle façon que
(a) pour le chargement d'un conteneur de marchandises (16) dans le conteneur extérieur (2) monté sur l'AGV (1), les dents de chargement (13) du dispositif de levage (10) supportant un conteneur de marchandises (16) peuvent être abaissées verticalement lors d'un positionnement approprié de l'AGV (1), jusqu'à ce que le conteneur de marchandises (16) soit soutenu par le côté inférieur dans le conteneur extérieur (2) et jusqu'à ce que les dents de chargement (13) faisant saillie dans le conteneur extérieur (2) dans une section inférieure de celui-ci à travers les fentes verticales (V₁, V₂) ne soient plus en contact avec le conteneur de marchandises (16) et puissent ensuite être sorties linéairement hors du conteneur extérieur (2) par déplacement en ligne droite de l'AGV (1)
et
(b) pour le retrait d'un conteneur de marchandises (16) hors du conteneur extérieur (2) monté sur l'AGV (1), les dents de chargement (13) de la fourche de chargement (12) s'introduisent dans une section inférieure du conteneur extérieur (2) à travers les fentes verticales (V₁, V₂) lors d'un déplacement en ligne droite approprié de l'AGV (10) sous le conteneur de marchandises (16), et peuvent ensuite être relevées avec le conteneur de marchandises (16), jusqu'au retrait du conteneur de marchandises (16) vers le haut hors du conteneur extérieur (2).

5. Système selon la revendication 4,
**caractérisé en ce que**
la largeur intérieure du conteneur extérieur (2) est légèrement supérieure aux dimensions extérieures du conteneur de marchandises (16), de sorte que lors d'un positionnement centré du conteneur de marchandises (16) dans le conteneur extérieur (2), une fente est présente entre la paroi intérieure du conteneur extérieur (2) et la paroi extérieure du conteneur de marchandises (16) reçu dans celui-ci.

6. Système selon la revendication 5,
**caractérisé en ce que**
au niveau de la paroi intérieure du conteneur extérieur, il est prévu un ensemble de brosse (8) fermant au moins substantiellement la fente périphérique entre le conteneur extérieur (2) et le conteneur de marchandises (16).

7. Système selon l'une des revendications 4 à 6,
**caractérisé en ce que**
les parois latérales du conteneur extérieur (3, 4, 5, 6) font saillie verticalement au-delà des parois du conteneur de marchandises (16) reçu dans le conteneur extérieur (2).

8. Système selon l'une des revendications 4 à 7,
**caractérisé en ce que**
les deux dents de chargement (13) de la fourche de chargement (12) présentent une bande de transport (21) entraînée par moteur, avec laquelle un conteneur de marchandises (16) soutenu sur les dents de chargement (13) dans le plan de transport supérieur (E₁) est remis à un dispositif de transport (11) situé devant la fourche de chargement (12) ou avec laquelle un conteneur de marchandises (16) acheminé par le dispositif de transport (11) dans le plan de transport supérieur (E₁) peut être positionné de façon appropriée sur les dents de chargement (13).
